(19) Europäisches Patentamt
European Patent Office
Office européen des brevets

(11) EP 3 376 445 A1

(12) EUROPEAN PATENT APPLICATION

(43) Date of publication:
19.09.2018 Bulletin 2018/38

(51) Int Cl.:
G06Q 10/04 (2012.01)   G06Q 10/08 (2012.01)

(21) Application number: 18160663.3

(22) Date of filing: 08.03.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 15.03.2017  US 201762471396 P
29.08.2017  US 201715689007

(71) Applicant: Fantini, Fabrizio
86039 Termoli Campobasso (IT)

(72) Inventor: Fantini, Fabrizio
86039 Termoli Campobasso (IT)

(74) Representative: Frontoni, Stefano
Buzzi, Notaro & Antonielli d'Oulx
Corso Vittorio Emanuele II, 6
10123 Torino (IT)

(54) **METHOD AND SYSTEM FOR RETAIL STOCK ALLOCATION**

(57)    A method and system for retail stock allocation. The system includes remote client devices positioned at retail stores of a retail chain and a computational device positioned at a head office of the retail chain. The computational device is configured to receive sales data from the stores and compute a sales forecast at the store level for each item and size, based on past sales, category seasonality and size-level allocation. A store level budget is then computed based on the current balance between stock levels and sales forecast. The system sends an initial proposal to each store with recommended list of orders and releases for items and sizes staying within the budget calculated for the store. The proposal is editable by retail store managers strictly within the budget constraints. After collecting the modified proposals the expected profit is maximized through the optimization of stock movements which includes trans-shipments across stores.

FIG.1

**Description**

CROSS-REFERENCE TO RELATED APPLICATIONS

This application claims the benefit of US Provisional Application No. 62/471396, filed March 15, 2017, the contents of which are incorporated herein by reference.

FIELD OF THE INVENTION

The present invention relates to the field of inventory management. More particularly, the present invention relates to a system and method for retail stock allocation.

BACKGROUND OF THE INVENTION

Inventory allocation is crucial to retail, even more so to high-end fashion retail: the Stock Keeping Unit (SKU) lifecycle is limited, residual end-of-life values are either very low or zero, SKU performance is difficult to predict accurately and volatile, and the unit value at stake is high. The allocation process has to match scarce resources with unknown demands, to optimally accelerate stock rotation avoiding missed opportunity and, therefore, ultimately increase sales. Historically, stores are allocated stock centrally, but challenges arise due to the fragmented and highly local item/size nature of the demand that make it difficult to accurately predict sales. Relatively consistent stock allocation across the stores and across seasons has also been found to be sub-optimal.

Multiple prior art have discussed fashion inventory management, with a focus either on how to allocate the stock, how to buy inventory before the season starts, or how to update the merchandise plan during the season. A dynamic programming approach is often used to solve such problems. Agrawal and Smith formulated a dynamic stochastic optimization model that determines total order size and optimal inventory allocation across non-identical stores for each period. They use Bayesian inference to model partially correlated demands across stores and time periods, and then dynamic programming to find an optimal allocation. Fisher and Rajaram applied linear programming to estimate a formula to create the season forecast for the chain by testing a subset of the chain. However, these approaches do not take into account the store managers' input. Macy's, a department store company, for example, reported (WSJ, 12th August 2010) that considering store demands as homogeneous is a suboptimal strategy because one can exploit differences in store demands to increase relevance and therefore ultimately grow the realized profits.

Van Donselaar et al. highlight the need to take into account the diversity of demand across stores and provides a framework to apply micro merchandising, a practice followed by a significant number of retailers: each store has a unique assortment, to maximize its consumer appeal. The author attempts to infer store managers' behavior in order to adapt the automatic replenishments. However, in practice it is operationally challenging to manage a dynamic programming model across multiple time periods and multiple stores.

The idiosyncracies of the fashion industry make the traditional store-level forecasting process complex and the results are unsatisfactory. Sales are highly volatile and fragmented, and multiple intrinsically noisy and volatile factors must be taken into account, including seasonality, fashion trends, promotions, and others. Thomassey, 2010 is the key reference in this field.

Caro and Gallien, 2010 implemented a model for Zara, a Spanish fashion chain, combining a forecast with store managers' demands. The core model is stochastic and predicts SKU-store level sales during a replenishment period as a function of: expected demand, available inventory, and store stockout policy. They then formulate a mixed-integer program that embeds a piecewise-linear approximation of the first model applied to every store in the network; the output store shipment quantities maximize overall predicted sales subject to inventory availability and other constraints. The model is based on weekly forecasts, suited for fast-moving items such as those of Zara, and is optimal for the particular merchandising policy in which SKUs with size-level stockouts are removed from the shelves. But, in the high-end fashion segment the stores place greater emphasis on increasing stock rotation and reducing slow-moving items as unsold stock generates very significant cash depreciation.

Thus, there is a need for a system and method that addresses the above mentioned shortcomings of retail stock allocation.

OBJECTS OF THE INVENTION

An object of the present invention is to provide a system and method for customizing retail stock allocation to improve sales and optimize stock movement.

Another object of the present invention is to provide a system and method for retail stock allocation with improved forecast accuracy and granularity.

A further object of the present invention is to provide a system and method for retail stock allocation which enables two or more retail stores to trade inventory laterally to minimize overstock and stock-out situations economically.

A still another object of the present invention is to provide a system and method for retail stock allocation which enables active participation of retail store personnel in making inventory allocation decisions to take into account store-specific consumer demand.

A still further object of the present invention is to provide a system and method for increasing stock rotation and reducing slow-moving items.

These as well as other objects of the present invention are apparent upon inspection of this specification, including the drawings and appendices attached hereto.

SUMMARY OF THE INVENTION

The following presents a simplified summary in order to provide a basic understanding of some aspects of the disclosed invention. This summary is not an extensive overview, and it is not intended to identify key/critical elements or to delineate the scope thereof. Its sole purpose is to present some concepts in a simplified form as a prelude to the more detailed description that is presented later.

The present invention satisfies the need in the prior art by providing novel, systematic, and effective method for retail stock allocation. The system of the present invention comprises one or more hardware or software modules included in a computational device which do a number of calculations to centrally generate sales forecast for stores of a retail chain taking into account the sales data from the stores. Based on the sales forecast and current stock level initial proposals comprising budget and inventory recommendations specific to the stores are sent from the computational device to the stores over a network. The system allows the store personnel to modify the initial proposals presented through a user interface on client devices installed at the stores. This feature enables the system to leverage the store personnel's insight and experience, by directly feeding their input into the central allocation process. After receiving the modified proposals from the stores the computational system at the head office then optimally allocates inventory considering expected demand, warehouse availability, logistic costs and stock availability constraints. The computational device also directs the stores for lateral shipment of stock based on orders and releases specified for the stores.

As per the method of the present invention inventory allocation becomes part of a retail-integrated management process, from merchandise planning and open-to-buy management, to in-season sales forecasting, to the design and measurement of promotions. The present invention addresses multiple ambitious goals: reduce unsold stock, increase rotation, empower store managers, increase relevance to local consumer demand, and increase profits.

To the accomplishment of the foregoing and related ends, certain illustrative aspects of the disclosed invention are described herein in connection with the following description and the annexed drawings. These aspects are indicative, however, of but a few of the various ways in which the principles disclosed herein can be employed and is intended to include all such aspects and their equivalents. Other advantages and novel features will become apparent from the following detailed description when considered in conjunction with the drawings.

BRIEF DESCRIPTION OF THE DRAWINGS

In order to describe the manner in which features and other aspects of the present disclosure can be obtained, a more particular description of certain subject matter will be rendered by reference to specific embodiments which are illustrated in the appended drawings. Understanding that these drawings depict only typical embodiments and are not therefore to be considered to be limiting in scope, nor drawn to scale for all embodiments, various embodiments will be described and explained with additional specificity and detail through the use of the accompanying drawings in which:

FIG.1 shows a general architecture of a system for retail stock allocation that operates in accordance with one embodiment of the present invention;

FIG.2 illustrates a flowchart depicting the general steps associated with retail stock allocation method in accordance with an embodiment of the present invention;

FIG.3A illustrates summary of an exemplary initial proposal sent to a store in accordance with one embodiment of the present invention;

FIG.3B illustrates summary of the proposal of FIG.3A returned from the store after being modified in accordance with one embodiment of the present invention;

FIG.3C illustrates summary of an optimal stock allocation after receiving edited proposal of FIG.3B in accordance with one embodiment of the present invention; and

FIG.4 illustrates impact on sales of exemplary test stores through test versus scaled control graph upon implementation of the system and method of the present invention on the inventory allocation system of the test stores.

DETAILED DESCRIPTION OF THE INVENTION

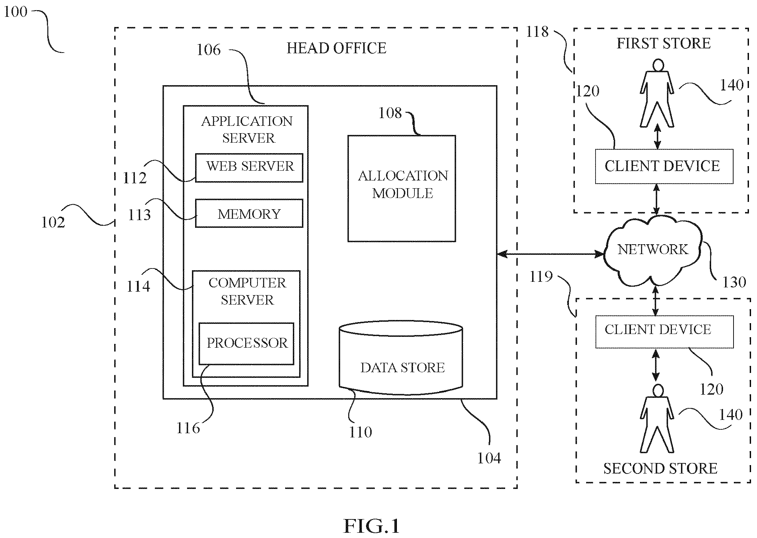

FIG.1 illustrates the general architecture of system 100 for retail stock allocation with artificial intelligence and human collaboration, hereinafter referred to as retail allocation system 100 or as system alternatively, that operates in accordance with one embodiment of the present invention. Graphical user interface (GUI) displays, also referred to as user interface or web user interface, are presented on a plurality of remote client devices 120 connected to a computational device 104 via network 130. In a preferred embodiment, the computational device 104 is assumed to be located at the head office 102 of a retail chain and the client devices 120 are located at plurality of retail stores. In the present example, although only two retail stores - first store 118 and second store 119 of the retail chain are shown, it would be obvious to those skilled in the art that any number of client devices can remain communicatively connected to the computational device 104. The retail chain of the present example can be a high end fashion retail chain having presence across a vast retail network.

The client devices 120 may be any device capable of presenting data and having an input device. The client device 120 may include, but not limited to, personal computers, server computers, mobile devices, tablets, hand-held or laptop devices, smart phones, personal digital assistants or any similar devices. As used herein, the term "network" generally refers to any collection of distinct networks working together to appear as a single network to a user. The term also refers to the so-called world wide "network of networks" i.e. Internet which is connected to each other using the Internet protocol (IP) and other similar protocols. The Internet provides file transfer, remote log in, electronic mail, and other services. As described herein, the exemplary public network 130 of FIG. 1 is for descriptive purposes only and it may be wired or wireless. Although the description may refer to terms commonly used in describing particular public networks such as the Internet, the description and concepts equally apply to other public and private computer networks, including systems having architectures dissimilar to that shown in FIG. 1. With respect to the present description, the computational device 104 may include any service that relies on a database system that is accessible over a network, in which various elements of hardware and software of the database system may be shared by one or more users of the retail stock allocation system 100. To this end, the users 140 of the client device 120, depicted as 140 in FIG.1, may include any staff of the retail stores. The GUI or web user interface provided by the computational device 104 on the client devices 120 may also be utilized by the users 140 for submitting and retrieving any data to and from the computational system 104.

The components appearing in the computational device 104 refer to an exemplary combination of those components that would need to be assembled to create the infrastructure in order to provide the tools and services contemplated by the present invention. As will be apparent to one skilled in the relevant art(s), all of components "inside" of the computational device 104 may be connected and may communicate via a wide or local area network (WAN or LAN).

The computational device 104 includes an application server or executing unit 106, an allocation module 108 and a data store 110. The allocation module 108 can be a hardware or software module. The application server or executing unit 106 comprises a web server 112 and a computer server 114 that serves as the application layer of the present invention. It would be obvious to any person skilled in the art that, although described herein as the data being stored in a single data store with necessary partitions, a plurality of data stores can also store the various data and files of multiple retail stores and central warehouse.

The Web server 112 is a system that sends out Web pages or web user interfaces containing electronic data files to remote browsers (i.e. browsers installed in the client devices 120). That is, the Web server 112 provides the user interface to the users in the form of editable proposals on client devices 120.

The computer server 114 may include a processor 116. The computational device 104 performs a portion or all of the processing steps of the retail stock allocation method described herein in response to the processor 116 executing one or more sequences of one or more instructions contained in a memory, such as the memory 113. Such instructions may be read into the memory 113 from another computer readable medium, such as a hard disk or a removable media drive. One or more processors in a multi-processing arrangement may also be employed to execute the sequences of instructions contained in memory 113. The term "computer readable medium" as used herein refers to any medium that participates in providing instructions to the processor 116 for execution. A computer readable medium may take many forms, including but not limited to, non-volatile media, volatile media, and transmission media. Non-volatile media includes, for example, optical, magnetic disks, and magneto-optical disks, such as the hard disk or the removable media drive.

Although the description of the computer server 114 may refer to terms commonly used in describing particular computer servers, the description and concepts equally apply to other processing systems, including systems having architectures dissimilar to that shown in FIG. 1.

The computational device 104 optimally allocates stock for delivery from one or more central warehouses to a plurality of retail stores and/or for trans-shipment of stock among a plurality of retail stores. The process of optimal stock allocation involves the following major steps

1. Headoffice-driven automated forecast: Calculation of sales forecast at the SKU/size/store level, based on past sales, category seasonality and size-level allocation.

2. Headoffice-driven proposal to the stores: Each store is assigned a budget based on the current balance between its stock levels and expected (potential future) sales. Together with assigning a budget, the system recommends a list of item/sizes to order and release (proposal); orders and releases can be mandatory or just suggested, but in any case must sum up to the budget (releases free up budget, orders consume it).

3. Store-driven internal marketplace: During a given time window, store managers can modify the proposed non-mandatory suggestions freely, while always operating within the budget constraints (e. g. quantities of new items that can be ordered are capped by the budget, but additional budget can be freed up by releasing items currently in stock).

4. Headoffice-driven optimal allocation: The expected profit is maximized through the optimization of stock movements. The problem formulation contemplates expected demand, warehouse availability, logistic costs and stock availability constraints. The output of the optimization includes both deliveries from the central warehouses as well as trans-shipments directly across stores.

5. Store-driven logistics: Finally, orders and releases are optimally matched (minimizing shipments) and the parcels are shipped.

The allocation module 108 configures the processor 116 to perform a series of calculations with respect to the above-mentioned steps to determine optimum retail stock allocation values. Some of the notations used herein to express the equations used for the calculations are given below-

$J$ is the set of stores, and $j$ is a specific store (first store, for example)

$S$ is the set of sizes, and $s$ is a specific size

$I$ is the set of items, $i$ is a specific item, and $I_C$ is the set of items of a specific category $C$;

$w$ is a generic week, and $\tilde{w}$ is the current week; the set of weeks is denoted as $W$

$P_{ij}^{w}$ is the full price for item $i$ in store $j$ at week $w$, $\tilde{P}_{ij}^{w}$ is the pocket price paid

$E_{isj}^{w}$ the quantity in stock at the store $j$ at the end of week $w$

$H_{is}^{w}$ is the quantity available in the warehouse at the end of week $w$

$Y_{isj}^{w}$ is the quantity of item $i$ and size $s$ sold in store $j$ at week w

$\tilde{Y}_{isj}^{w}$ is the sales forecast for item $i$ and size $s$ in store $j$ at week w

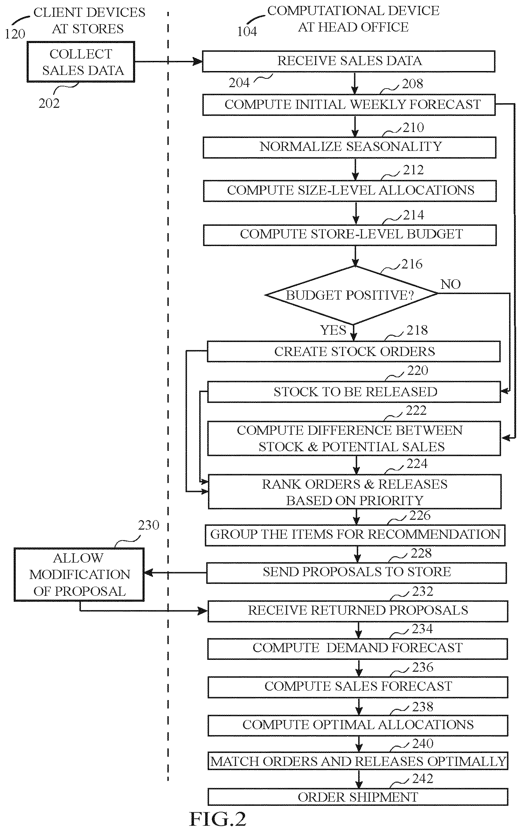

Reference to FIG.1 and FIG.2, in the present example, the client devices 120 at the retail stores collect the sales data as in step 202. The sales data includes point of sales (POS) transactions and their related master data such as SKU (also referred to as item hereinafter) description, quantity, item categories, unit costs, store coordinates, name and type, daily store traffic and stock levels at each store etc. The computational device 104 at the head office 102 collects the sales data from each of the retail stores as in step 204.

Automated SKU/size forecast: For each of the retail stores, as in step 208 of FIG.2, the allocation module 108 computes the initial weekly forecast. To compute this initial weekly forecast of SKU, size, and store the total sales by store by SKU for a definite period (referred to as a first period of time), for example for the last four weeks, is computed first using the following equation.

$$Y_{ij}^* = \sum_{w=\widetilde{w}-4}^{\widetilde{w}-1} \sum_{s\in S} Y_{sij}^{\widetilde{w}}$$

and the weekly seasonalities $z_C^w$ for each item category $C$ is then estimated. The forecast for sales $\widetilde{Y}_{ij}^*$ for the next few weeks (referred to as a second period of time) (e.g. next eight weeks) is computed based on the expected category seasonalities. For store $j$ (e.g. for first store) and item $i$, this is calculated as

$$\widetilde{Y}_{ij}^* = Y_{ij}^* \frac{\sum_{k=0}^{7} z_C^{w+k}}{\sum_{k=1}^{4} z_C^{w-k}}$$

Finally, the quantity $\widetilde{Y}_{ij}^*$ is disaggregated by size and this yields the initial weekly forecast $\widetilde{Y}_{ijs}^*$

Category seasonality: From the weekly aggregated sales, for each category, the effect of markdowns is removed by estimating the model

$$Y_C^w = \alpha_C + \beta_C md_C^w$$

Then for each week normalized sales is estimated as follows

$$\overline{Y}_C^w = Y_C^w - \beta_C md_C^w$$

The normalized sales $\overline{Y}_C^w$ are then averaged over the years, obtaining $\overline{\overline{Y}}_C^w$, and this is then smoothened using the moving average of the past 3 weeks, for example:

$$z_C^w = \frac{\overline{\overline{Y}}_C^{w+1} + 3\overline{\overline{Y}}_C^w + \overline{\overline{Y}}_C^{w-1}}{5}$$

Finally, as in step 210 of FIG.2, the allocation module 108 normalizes seasonality (every category sums to 52, for example) as below-

$$\overline{z}_C^w = z_C^w \times \frac{52}{\sum_w z_C^w}$$

The following table shows examples of category seasonality -

Table 1

| week | category | seasonality |
|------|----------|-------------|
| 1 | Padded | 2.369 |
| 2 | Padded | 2.069 |
| 1 | Jacket | 1.516 |
| 2 | Jacket | 1.426 |
| 1 | Accessories | 0.726 |
| 2 | Accessories | 0.762 |
| 1 | Dresses | 3.316 |
| 2 | Dresses | 3.566 |

Size-level allocation: Item size-level allocation is typically performed based on the assumption of historical consistency and homogeneous store distributions of sales by size. The allocation module 108 computes two factors as inputs to the assumed distribution of sizes.

The first factor, denoted herein by $p_i$, is the relative frequency of sales of size $s$ versus the total sales for each item at each store:

$$p_i(s) = \frac{\sum_{w \in W} \sum_{j \in J} Y_{isj}^w}{\sum_{w \in W} \sum_{j \in J} \sum_{s \in S} Y_{isj}^w} \quad \forall s \in S,$$

where $J$ is the set of all stores $j$, $S$ is the set of all sizes $s$. The second factor is the relative frequency of size $s$ versus the whole collection of items for each store; denoted herein by $p_j$ :

$$p_j(s) = \frac{\sum_{w \in W} \sum_{i \in I} Y_{isj}^w}{\sum_{w \in W} \sum_{i \in I} \sum_{s \in S} Y_{isj}^w} \quad \forall s \in S,$$

where $I$ is the set of all items $i$ sold in the store $j$ .

To balance the two factors, the final item-size level allocation is calculated, as in step 212 of FIG.2, based on both factors, with equal weigth:

$$p_{ij} = 0.5 \cdot p_i + 0.5 p_j.$$

To forecast future sales $\widetilde{Y}_{isj}^*$ for each item and size, a random sample is generated according to the distribution

$p_{ij}$ of sizes, to match the total forecast $\widetilde{Y}_{ij}^*$ .

Proposal to the stores: The store-level budget is a simple measure of over- and under-stock, that gives store managers a transparent, non-monetary incentive to release non-performing stock so as to be able to order new items; it also increases empowerment of the store staff and ownership of the stock allocation decisions, since all stock received will always have been requested by them (although not all requests are fulfilled).

For each store $j$ (for example, for first store 118), the budget $\tilde{b}_j$ is computed as in step 214 as follows:

The sales potential $b_j$ is computed with an addition of a safety extra coverage of 20% and substraction of the total value of current stock -

$$b_j = \sum_i \widetilde{Y}_{ij}^* P_{ij} - \sum_i \left( \sum_{s \in S_i} E_{isj}^{\widetilde{w}-1} \right) P_{ij} + 0.20 \cdot \sum_i \widetilde{Y}_{ij}^* P_{ij},$$

where $P_{ij}$ is the price of item $i$ in store $j$ and $E_{isj}$ is the current stock of item $i$, size $s$ in store $j$. The store-level budget $\widetilde{b}_j$

$$\widetilde{b}_j = b_j - \frac{\sum_j b_j}{|J|} \ ,$$

is then computed as        calibrating all budgets so that the median across stores is zero.

If the budget $\widetilde{b}_j$ is found to be positive, as in step 216, then the store is relatively understocked and the allocation module 108 decides that stock order is required to be created for the store as in step 218. Otherwise, the store is relatively overstocked and the store should therefore release stock as decided in step 220. A simple example of budget calculation is shown below.

Table 2

|  | Item 1 | Item 2 | Item 3 |
|---|---|---|---|
| Full price | 100 | 200 | 150 |
| Pieces to sell | 5 | 3 | 3 |
| Stock | 2 | 4 | 2 |
| Potential sales = 5×100 + 3×200 + 3×150 = 1550<br>Stock value = 2×100 + 4×200 + 2×150 = 1300<br>Extra-coverage = 20%×1550 = 310<br>Budget = 1550 -1300 + 310 = +560 > 0 | | | |

Once the budgets are calculated, for each store/SKU/size, the difference between current stock and potential sales is computed as in step 222 of FIG.2:

$$\Delta_{isj} = E_{isj}^{\widetilde{w}-1} - \widetilde{Y}_{isj}^*$$

The orders and releases are then ranked, as in step 224, based on their relative priority, through the following ratio:

$$\Delta_{isj}^{\%} = \frac{|\Delta_{isj}|}{E_{isj}^{\widetilde{w}-1} + \widetilde{Y}_{isj}^*}$$

The items of each store are then grouped, as in step 226, in quartiles based on $\Delta_{isj}$ and $\Delta_{isj}^{\%}$ so that finally the recommendation for each items is described. Given below is exemplary recommendation actions based on quartile classification.

Table 3

|  | Δ > 0 (high stock) | Δ < 0 (low stock) |
|---|---|---|
| Δ% quartile 1 or 2 (low) | No action | No action |
| Δ% quartile 3 | Recommended release | Replenishment |
| Δ% quartile 4 (high) | Mandatory release | Urgent replenishment |

An example of recommended actions, as decided in step 226 by the allocation module, is given below.

Table 4

| Store | Item | Stock | Potential | Delta | Ratio | Quartile | Action |
|-------|------|-------|-----------|-------|-------|----------|--------|
| store 1 | Item 1 | 10 | 1 | 9 | 9/11=0.82 | 4 | Mandatory release |
| store 1 | Item 2 | 1 | 10 | -9 | 9/11= 0.82 | 4 | Urgent replenishment |
| store 2 | Item 1 | 3 | 1 | 2 | 2/4= 0.5 | 3 | Recommended release |
| store 2 | Item 2 | 6 | 5 | 1 | 1/11 = 0.09 | 1 | No action |
| store 3 | Item 1 | 7 | 8 | -1 | 1/15= 0.07 | 1 | No action |
| store 3 | Item 2 | 2 | 5 | -3 | 3/7= 0.43 | 2 | Replenishment |

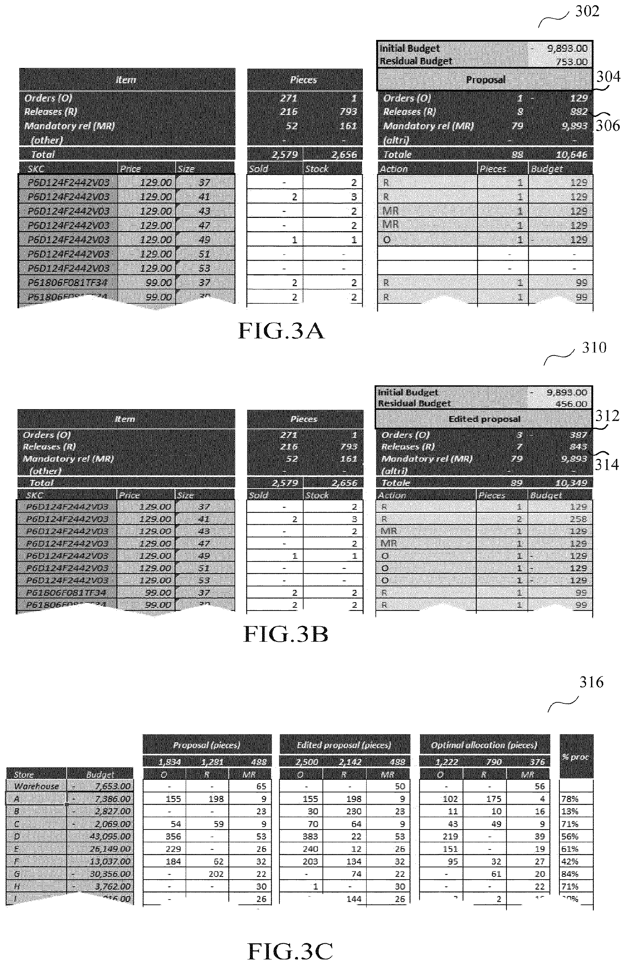

The computational device 104 then sends the initial proposals with the above mentioned recommendations to each of the stores as in step 228. FIG.3A shows an abstract 302 of an exemplary initial proposal sent to a store in accordance with an embodiment of the present invention. As shown in FIG.3A, the initial proposal comprises one or more orders 304 and one or more releases 306 which a store manager can edit as per requirement. The editable initial proposals are presented in the form of Graphical user interface (GUI), also referred to as user interface or web user interface on the client devices 120 connected to the computational device 104 via network 130. The proposals sent to the stores follow these rules:

- the recommendations must be within the store budget, that cannot be negative

- priority is given to the recommendations with a relatively higher $\Delta_{isj}^{\%}$

- stores can ask no more than the total quantity available (from warehouse inventory and from other stores releases)

- items delivered to the stores for the first time in the past 2 weeks cannot be released

- at least one piece for each item/size must be left in the store

- orders for sizes that are currently out of stock are prioritized.

Internal marketplace: Any authorized store personnel is allowed to edit the initial proposal as in step 230 of FIG.2 to include one or more requests in terms of orders and/or releases. Accordingly, the store managers can edit the initial proposals as they see fit, based on their relevant local knowledge. They are allowed to modify anything, except for mandatory instructions.

The stores can request items and sizes outside the initial proposal and even not yet in the stock of the store, and they can also change the number of pieces ordered. However they must comply with their budget constraint.

At the end of the assigned time window to make changes, the modified proposals are collected, as in step 232 by the computational device 104. FIG.3B illustrates an exemplary modified proposal 310 submitted by a retail store against the initial proposal 302. The modified proposal 310, compared to the initial proposal 302, shows as to how the store manager released some pieces so to be able to order new items. For instance, in the edited or modified proposal 310, the number of orders 312 has been increased to 3 from the original number of order 1 (indicated by referral numeral 304 in FIG.3A). Similarly, in the edited or modified proposal 310, the number of releases 314 has been reduced to 7 from the original number of release 8 (indicated by referral numeral 306 in FIG.3A).

Besides feeding into replenishment orders, the store modified proposals are a feedback mechanism to the central merchandising team: a natural discovery process on the level of appetite that the stores have for each item, based on their understanding of local trends. In turn these can help predict the future slow and fast movers, both locally as well as globally.

Optimal allocation: Let us assume to be at the end of the week $\tilde{w}$ -1 and the allocation module calculates the allocation of the items for week $\tilde{w}$. Let $R_{isj}^{\tilde{w}}$ be the one or more requests in terms of number of pieces ordered by the store managers, if positive, or released, if negative. Moreover, let $x_{isj}^{\tilde{w}}$ be the quantity (item $i$, size $s$, and store $j$) to be

allocated at week $\tilde{w}$. If $x_{isj}^{\tilde{w}} > 0$ the store will receive the corresponding articles; otherwise, if $x_{isj}^{\tilde{w}} < 0$ the store is expected to release the goods and ship them to other stores.

The process is based (adapted from Correa, 2007) on three calculations made by the allocation module:

1. demand forecast for week $\tilde{w}$ at item/size level for each store

2. expected sales as a function of stock constraints, for each item in each store

3. optimal allocation, maximizing the expected future profit

Demand forecast: For a given category $C$, let $\widetilde{Y}_C^{\tilde{w}}$ be the sales forecast (aggregate: all sizes, all stores, and items in $C$) of week $\tilde{w}$ calculated by the allocation module. This quantity is disaggregated to have the sales forecast for a single item/size in a given store in the following way:

- by store, according to the ratio between past store sales for items in $C$ and the total past sales for items in $C$ across all stores, during the previous year
- by item, according to the proportion of store managers' positive requests for the fixed item with respect to the total positive requests for items in $C$
- by size, using the relative frequency for a size s of item $i$ found at step 212

With the set of weeks until a predetermined past period (e.g. till last December) noted as $W^*$, the sales forecast for the week i.e. for a specific period is computed by the allocation module in the following way:

$$\widetilde{Y}_{isj}^{\tilde{w}} = \widetilde{Y}_C^{\tilde{w}} \cdot \frac{\sum_{w \in W^*} \sum_{i \in C} \sum_{s \in S} Y_{isj}^w}{\sum_{j \in J} \sum_{w \in W^*} \sum_{i \in C} \sum_{s \in S} Y_{isj}^w} \cdot \frac{\sum_{s \in S} \max \ (R_{isj}^{\tilde{w}}, 0)}{\sum_{i \in C} \sum_{s \in S} \max \ (R_{isj}^{\tilde{w}}, 0)} \cdot p_{ij}(s)$$

Finally, the sales forecasting is combined with the store requests as follows to compute the demand forecast $\lambda_{isj}^{\tilde{w}}$ for a specific period (for current week in the present example) as in step 234 of FIG.2:

$$\lambda_{isj}^{\tilde{w}} = \alpha \cdot \left[ E_{isj}^{\tilde{w}-1} + R_{isj}^{\tilde{w}} \right] + \beta \cdot \widetilde{Y}_{isj}^w,$$

where $\alpha$ and $\beta$ are two coefficients such that $\alpha + \beta = 1$.

The weight assigned to the manager's experience and the statistical forecasting are equal. In the present example, these coefficients have been set to $\alpha = \beta = 1/2$. Over time, updates are possible based on the relative reliability/accuracy index learned from data. The better the intuition at predicting the actual future sales, the larger the $\alpha$ should get.

Expected sales as a function of stock constraints: The demand forecast so far does not account for stock constraints, therefore stock-outs might occur; however, in practice, the expected sales must be a function of the store stock.

Let $N_{isj}^{\tilde{w}}(t)$ be the Poisson process that counts the number of items sold in the time interval ($\tilde{w}$-1, $\tilde{w}$-1 + $t$). Mutual independence is assumed across the sales of different sizes and items; furthermore it is also assumed that the average intensity of the process is equal to the demand forecast $\lambda_{isj}^{\tilde{w}}$ computed at step 234.

It is defined-

$$\tau_{isj}^{\widetilde{w}}\left(E_{isj}^{\widetilde{w}-1} + x_{isj}^{\widetilde{w}}\right) = \inf\left\{t \geq 0 : N_{isj}^{\widetilde{w}}(t) = E_{isj}^{\widetilde{w}-1} + x_{isj}^{\widetilde{w}}\right\}$$

the first time instant in which the size $s$ of item $i$ is out of stock at store $j$. The number $E_{isj}^{\widetilde{w}-1} + x_{isj}^{\widetilde{w}}$ corresponds to the level of stock of item $i$, size $s$, in store $j$ after receiving the new replenishments.

Suppose that $T$ is the time horizon between two runs of the process, e.g. $T = 2$ if replenishments are scheduled every two weeks. To calculate the expected number of sales until the stock-out time or until $T$, the equation used is

$$\mathsf{E}\left[N_{isj}^{\widetilde{w}}\left(T \wedge \tau_{isj}^{\widetilde{w}}\left(E_{isj}^{\widetilde{w}-1} + x_{isj}^{\widetilde{w}}\right)\right)\right].$$

Using the Poisson process properties, this quantity can be written as-

$$\sum_{k=1}^{E_{isj}^{\widetilde{w}-1}+x_{isj}^{\widetilde{w}}} \mathsf{P}(N_{isj}^{\widetilde{w}}(T) \geq k)$$

which yields the expected sales, as in step 236, as a function of forecast demand and new stock allocated.

Logistics: The total expected income can be expressed as a function of the items' allocation among stores $x_{isj}^{\widetilde{w}}$.

First, the expected income for item $i$, size $s$, across all stores, is calculated by multiplying the expected sales and the price $P_{ij}$ of the item in each store

$$\sum_{j \in J} P_{ij} \sum_{k=1}^{E_{isj}^{\widetilde{w}-1}+x_{isj}^{\widetilde{w}}} \mathsf{P}(N_{isj}^{\widetilde{w}}(T) \geq k).$$

Then, adding to this quantity the potential profit from items remaining in the warehouse after the shipments are done:

$$K \cdot \left(\sum_{s \in S}\left(H_{is}^{\widetilde{w}} - \sum_{j \in J} x_{isj}^{\widetilde{w}}\right)\right).$$

These items could be used for future shipments, so they are assigned the value $K$ that corresponds to the expected future income. $k$ is larger at the beginning of the season and of the item's life cycle, then progressively smaller as the shelf time left gets shorter.

Finally, the unknown $x_{isj}^{\widetilde{w}}$ are calculated, as in step 238, to maximize, for each $i$ and $s$ :

$$\sum_{j \in J} P_{ij}^{\widetilde{w}} \cdot \left( \sum_{k=1}^{E_{isj}^{\widetilde{w}-1} + x_{isj}^{\widetilde{w}}} \mathrm{P}\left(N_{isj}^{\widetilde{w}}(T) \geq k\right) \right) + K \cdot \left( H_{is}^{\widetilde{w}-1} - \sum_{j \in J} x_{isj}^{\widetilde{w}} \right),$$

where $T$ as usual is the time horizon of the procedure.

The allocation module optimizes the allocation subject to the following constraints:

$$x_{isj}^{\widetilde{w}} \leq \max\left(R_{isj}^{\widetilde{w}}, 0\right)$$

$$x_{isj}^{\widetilde{w}} \geq \min\left(R_{isj}^{\widetilde{w}}, 0\right)$$

$$0 < \sum_{j \in J} x_{isj}^{\widetilde{w}} < H_{is}^{\widetilde{w}-1},$$

where the first two conditions ensure that the store requests are not exceeded (if $R_{isj}^{\widetilde{w}} > 0$ ) and that the maximum deliveries from the store do not exceed the released quantity (if $R_{isj}^{\widetilde{w}} < 0$ ). The last constraint ensures that no items are sent back to the warehouse from the stores, and that (trivially) every piece is available from the stores or the central warehouse. The system matches the orders and releases of all the stores to find the most economic shipment option as in step 240. It then suggests shipment of stock among the stores laterally wherever possible or from central warehouse to stores, as applicable as in step 242. For example, if first store releases an item ordered by second store, then the system advises shipment of the released item from first store to second store.

The optimization problem is an integer programming formulation, that was solved with the GENOUD algorithm (Mebane and Sekhon, 2011).

For measuring the effectiveness, as an exemplary case study, the method of retail stock allocation of the present invention was implemented on a leading Italian Premium Fashion retailer with over 100 stores in Italy which collectively sells 400k pieces a year with an average item selling price of 150 EUR. Two collections alternate every year, summer and winter, each consisting of 1300 SKUs grouped in 20 categories; as is typical of the luxury segment, stores carry a low stock level of each item, with a focus on guaranteeing availability of all sizes in the item size plan at each store.

Sales are highly affected by seasonality factors. Historically, stores were allocated stock centrally, but challenges were arising due to the fragmented and highly local item/size nature of the demand, that made it difficult to accurately predict sales. Therefore, a relatively consistent stock allocation across the stores and across seasons was used, which was perceived by the management as sub-optimal.

The scope of the study spanned across the entire store footprint of the leading Italian Premium Fashion retailer and the whole Spring-Summer collection of the year 2016. However, the initial pilot test and control groups were limited respectively to 18 and 46 stores. The system and method of the present invention was tested with a 13 weeks long test versus control group experiment, where the control stores relied on a traditional headoffice-driven optimization, without the store managers' input. The retailer's management selected the test and control stores so to represent, based on their experience, a representative sample of the store universe in terms of geographical location, sales volumes, and historical seasonality.

The impacts of the reatil stock allocaiton method of the present invention are measured through 4 indexes, 3 of which are overstock measures (shipments to the stores not to exceed demand) and 1 is a measure of understock (shipments sufficient to cover consumers' demand).

The first index is the Shipment Success Ratio (SSR): the proportion of (positive) replenishments actually sold within a set period after delivery, cumulated over time.

Let $I_{isj}^{w}$ be the number of pieces of item $i$, size $s$, shipped to store $j$ during week $w$, and suppose that the pilot project implementing the system and method of the present invention started in week number 1. The SSR is computed for items with non-zero replenishments. So, for every week $\tilde{W}$, the set of the store-item couples for which there is at least one piece replenished is defined as-

$$A_{ij}^{\tilde{w}} = \{(i,j) \mid \sum_{t=1}^{T} \sum_{s \in S} I_{isj}^{\tilde{w}} > 0\},$$

The corresponding indicator function is defined as-

$$I_{A_{ij}^{\tilde{w}}} = \begin{cases} 1 & \text{if } (i,j) \in A_{ij}^{\tilde{w}} \\ 0 & \text{otherwise} \end{cases}.$$

Hence, the SSR at week $\tilde{w}$ for the test group of stores $J_T$ can be expressed in the following way:

$$SSR_{J_T}^{\tilde{w}} = \frac{\displaystyle\sum_{i \in I} \sum_{j \in J_T} \left[ I_{A_{ij}^{\tilde{w}}} \cdot \min\left( \sum_{w=1}^{\tilde{w}} \sum_{s \in S} Y_{isj}^{w+1}, \sum_{w=1}^{\tilde{w}} \sum_{s \in S} I_{isj}^{w} \right) \right]}{\displaystyle\sum_{i \in I} \sum_{j \in J_T} \left[ I_{A_{ij}^{\tilde{w}}} \cdot \sum_{w=1}^{\tilde{w}} \sum_{s \in S} I_{isj}^{w} \right]}.$$

The second index is the Sales to Shipment Ratio (StSR): the proportion of sales over the number of replenished pieces up to the time of measurement, again cumulated over time. The StSR at week $\tilde{w}$ for the stores in $J_T$ can be computed as

$$StSR_{J_T}^{\tilde{w}} = \frac{\displaystyle\sum_{i \in I} \sum_{j \in J_T} \sum_{w=1}^{\tilde{w}} \sum_{s \in S} Y_{isj}^{w+1}}{\displaystyle\sum_{i \in I} \sum_{j \in J_T} \sum_{w=1}^{\tilde{w}} \sum_{s \in S} I_{isj}^{w}}.$$

The third overstock index is the Stock Velocity Ratio (SVR): the ratio between actual sales and potential sales (evaluated as residual stock plus past sales) up to the time of measurement. For the test group of stores at week $\tilde{w}$, the SVR is-

$$SVR_{J_T}^{\tilde{w}} = \frac{\displaystyle\sum_{i \in I} \sum_{j \in J_T} \sum_{w=1}^{\tilde{w}} \sum_{s \in S} Y_{isj}^{w+1}}{\displaystyle\sum_{i \in I} \sum_{j \in J_T} \left( \sum_{s \in S} E_{isj}^{w-1} + \sum_{w=2}^{\tilde{w}} \sum_{s \in S} Y_{isj}^{w} \right)}.$$

The fourth index measures under-stock and is the Demand Cover Ratio (DCR): the ratio between pieces sold and demand, used to understand if the sum of current stock plus new replenishments is sufficient to fulfil the clients' expected demand. To compute this, the demand for each item $i$, size $s$, in a store $j$ are estimated during week w multiplying past sales by an appropriate coefficient that increases with the number of stock-out days. Let $E_{isj}^d$ be the stock of store $j$ for the item $i$, size $s$, at the day $d$ of the week; the number of stock-out days occurred in that store for this item and size.is defined as-

$$\mathrm{DND}_{isj}^w = \sum_{d \in w} \mathbb{1}_{\{E_{isj}^d = 0\}}$$

Hence, the demand $D_{isj}^w$ for an item $i$, size $s$ can be obtained as follows:

if $Y_{isj}^w > 0 \, \mathrm{e} \, \mathrm{DND}_{isj}^w < 7$

then $D_{isj}^w = Y_{isj}^w \cdot \left( \dfrac{7}{7 - \mathrm{DND}_{isj}^w} \right)$

else $D_{isj}^w = D_{isj}^{w'}$ con $w' = \min\{w^* \mid \mathrm{D}_{isj}^{w^*} \neq 0\}$

else $D_{isj}^w = 0.$

The DCR at week $\tilde{w}$ for the stores in $J_T$ is

$$\mathrm{DCR}_{J_T}^{\tilde{w}} = \frac{\sum_{i \in I} \sum_{j \in J_T} \sum_{w = 1}^{\tilde{w}} \sum_{s \in S} Y_{isj}^{w+1}}{\sum_{i \in I} \sum_{j \in J_T} \sum_{w = 1}^{\tilde{w}} \sum_{s \in S} D_{isj}^{w+1}} .$$

Finally, the same four indexes for the control group stores $J_C$ are computed so that the results of the two groups can be compared. Table 5 below shows the monitoring metrics: test (T) vs control (C) KPIs.

Table 5

| Week | (T) Shipment Success % (SSR) | (T) Sales to Shipment % (StSR) | (T) Stock Velocity % (SVR) | (T) Demand Cover % (DCR) | (C) Shipment Success % (SSR) | (C) Sales to Shipment % (StSR) | (C) Stock Velocity % (SVR) | (C) Demand Cover % (DCR) |
|---|---|---|---|---|---|---|---|---|
| 1. | 12% | 166% | 6% | 58% | 12% | 161% | 5% | 57% |
| 2. | 19% | 111% | 12% | 59% | 17% | 112% | 9% | 56% |
| 3. | 22% | 86% | 17% | 60% | 19% | 76% | 13% | 58% |
| 4. | 30% | 93% | 24% | 60% | 24% | 76% | 19% | 60% |
| 5. | 31% | 88% | 27% | 61% | 27% | 68% | 21% | 62% |
| 6. | 35% | 90% | 28% | 61% | 30% | 73% | 23% | 61% |
| 7. | 40% | 91% | 31% | 61% | 33% | 74% | 26% | 61% |
| 8. | 43% | 100% | 34% | 60% | 36% | 81% | 28% | 61% |
| 9. | 43% | 92% | 36% | 60% | 39% | 89% | 31% | 60% |
| 10. | 47% | 99% | 38% | 60% | 42% | 94% | 33% | 60% |

(continued)

| Week | (T) Shipment Success % (SSR) | (T) Sales to Shipment % (StSR) | (T) Stock Velocity % (SVR) | (T) Demand Cover % (DCR) | (C) Shipment Success % (SSR) | (C) Sales to Shipment % (StSR) | (C) Stock Velocity % (SVR) | (C) Demand Cover % (DCR) |
|---|---|---|---|---|---|---|---|---|
| 11. | 51% | 106% | 41% | 60% | 46% | 101% | 36% | 59% |
| 12. | 53% | 112% | 44% | 60% | 50% | 110% | 39% | 59% |
| 13. | 58% | 132% | 49% | 61% | 53% | 123% | 43% | 60% |

At the end of the pilot project on the leading Italian Premium Fashion retailer, as can be seen in the above Table 5, the impacts were-

a. % increase in SSR, and 19% increase in StSR, a significant improvement in the relevance of shipments compared to the past, resulting in more sales.

b. % increase in SVR; the greater stock rotation leads to a reduction in unsold stock.

c. 1% greater DCR, suggesting further opportunity to improve the coverage of latent demand and further reduce the risk of being out-of-stock for sizes with potential demand.

These results, in monetary terms, translated into an estimated 280k EURO margin impact just during this pilot. As non-monetary benefits, store managers' positive feedback, sense of ownership and empowerment, resulted in a boost of staff morale. The store managers became more motivated to sell the items they had specifically requested.

Additionally, the present invention provides the central merchandising team with a frequent "survey-like" review of customers' preference, based on the requests of store managers as a proxy.

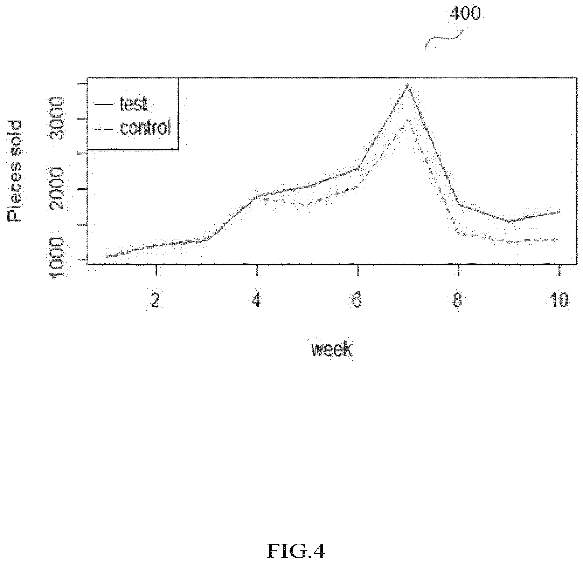

The positive impact on sales of the test stores is shown in FIG.4 in terms of graph 400 where control sales were scaled according to their proportion to test group sales before the test (test started in week 5). The estimated impact was a significant +16% revenues. Not only did the present invention improved store managers' morale through non-monetary incentive-driven empowerment, but it also improved store performance and profits. The brand boosted sales, demand cover, and stock rotation with an impact worth an estimated 2M EUR margin yearly.

When introducing elements or features of the present disclosure and the exemplary embodiments, the articles "a", "an", "the" and "said" are intended to mean that there are one or more of such elements or features. The terms "comprising", "including" and "having" are intended to be inclusive and mean that there may be additional elements or features other than those specifically noted. It is further to be understood that the method steps, processes, and operations described herein are not to be construed as necessarily requiring their performance in the particular order discussed or illustrated, unless specifically identified as an order of performance. It is also to be understood that additional or alternative steps may be employed.

Flowchart is used to describe the steps of the present invention. While the various steps in this flowchart are presented and described sequentially, some or all of the steps may be executed in different orders, may be combined or omitted, and some or all of the steps may be executed in parallel. Further, in one or more of the embodiments of the invention, one or more of the steps described above may be omitted, repeated, and/or performed in a different order. In addition, additional steps, omitted in the flowchart may be included in performing this method. Accordingly, the specific arrangement of steps shown in FIG.2 should not be construed as limiting the scope of the invention.

The invention also relates to a non-transitory computer readable storage medium as defined below.

1. A non-transitory computer readable storage medium encoded with instructions, which when executed by one or more processors of a computational device included in a retail stock allocation system, causes said retail stock allocation system to implement a retail stock allocation method comprising:

receiving a sales data from said plurality of retail stores through said plurality of remote client devices by said computational device;
computing an initial sales forecast with respect to a retail store of said plurality of retail stores for each item of a plurality of items of each size of a plurality of sizes of said plurality of items;
computing a store level budget by said computational device for said retail store based on said initial sales forecast and a stock value of said plurality of items computed for said retail store;

creating one or more orders for said plurality of items as per said plurality of sizes if said store level budget is found positive for said retail store or creating one or more releases if said store level budget is found negative for said retail store by said computational device;

sending, by said computational device, to a remote client device of said plurality of client devices positioned at said retail store, an initial proposal comprising one or more recommended actions related to said one or more orders and/or to said one or more releases;

allowing modification in said initial proposal at said remote client device to include one or more requests to make a modified proposal subject to fulfillment of one or more rules;

collecting said modified proposal by said computational device;

computing a demand forecast as a function of a sales forecasting, a current stock and said one or more requests with respect to said retail store, said each item and said each size for a specific period of time by said computational device;

computing by said computational device an expected sales as a function of said demand forecast and a new stock allocation;

optimizing by said computational device said new stock allocation for said each item of said each size for said retail store as a function of said demand forecast subject to fulfillment of a plurality of constraints related to said one or more requests and a quantity of said each item of said size available in a warehouse; and

matching by said computational device said one or more orders and/or said one or more releases with said new stock allocation with respect to said plurality of retail stores to find a most economic shipment option.

2. The non-transitory computer readable storage as in item 1 above, wherein said computation of said initial sales forecasting involves computation of a category seasonality for each category of said plurality of items and a size-level allocation for said each item.

3. The non-transitory computer readable storage as in item 1 above, wherein said most economic shipment option includes shipment of said each item among said plurality of stores laterally based on said matching of said one or more orders and said one or more releases.

4. The non-transitory computer readable storage as in item 1 above, wherein an impact of said optimization of said new stock allocation is measurable through a plurality of indexes.


**Claims**

1. A method for retail stock allocation in a retail stock allocation system, said system comprising a plurality of remote client devices positioned at a plurality of retail stores of a retail chain and a computational device positioned at a head office of said retail chain, wherein said plurality of remote client devices and said computational device are communicatively connected through a network and are operable to respond to one or more instructions, said method comprising the steps of:

receiving a sales data from said plurality of retail stores through said plurality of remote client devices by said computational device;

computing an initial sales forecast with respect to a retail store of said plurality of retail stores for each item of a plurality of items of each size of a plurality of sizes of said plurality of items;

computing a store level budget by said computational device for said retail store based on said initial sales forecast and a stock value of said plurality of items computed for said retail store;

creating one or more orders for said plurality of items as per said plurality of sizes if said store level budget is found positive for said retail store or creating one or more releases if said store level budget is found negative for said retail store by said computational device;

sending, by said computational device, to a remote client device of said plurality of client devices positioned at said retail store, an initial proposal comprising one or more recommended actions related to said one or more orders and/or to said one or more releases;

allowing modification in said initial proposal at said remote client device to include one or more requests to make a modified proposal subject to fulfillment of one or more rules;

collecting said modified proposal by said computational device;

computing a demand forecast as a function of a sales forecasting, a current stock and said one or more requests with respect to said retail store, said each item and said each size for a specific period of time by said computational device;

computing by said computational device an expected sales as a function of said demand forecast and a new stock allocation;

optimizing by said computational device said new stock allocation for said each item of said each size for said retail store as a function of said demand forecast subject to fulfillment of a plurality of constraints related to said one or more requests and a quantity of said each item of said size available in a warehouse; and

matching by said computational device said one or more orders and/or said one or more releases with said new stock allocation with respect to said plurality of retail stores to find a most economic shipment option.

2. The method as in claim 1, wherein said computation of said initial sales forecasting involves computation of a category seasonality for each category of said plurality of items and a size-level allocation for said each item.

3. The method as in claim 1, wherein said one or more orders and said one or more releases are ranked as per their relative priority.

4. The method as in claim 1, wherein said one or more rules ensure that said one or more recommended actions must lie within said store level budget and that said retail store cannot ask more than a total quantity available of said each item through said one or more requests.

5. The method as in claim 1, wherein said one or more requests of said modified proposal includes request for one or more items of said plurality of items of one or more sizes not included in said initial proposal.

6. The method as in claim 1, wherein fulfillment of said plurality of constraints ensure that said new stock allocation does not exceed said one or more requests made from said retail store, that a maximum delivery from said retail store does not exceed said one or more releases made from said retail store and that no said each item is sent back to said warehouse from said retail store.

7. The method as in claim 1, wherein said most economic shipment option includes shipment of said each item among said plurality of stores laterally based on said matching of said one or more orders and said one or more releases.

8. The method as in claim 1, wherein an impact of said optimization of said new stock allocation is measurable through a plurality of indexes which, preferably, comprise a shipment success ratio, a sales to shipment ration, a stock velocity ratio and a demand cover ratio.

9. A system for retail stock allocation, said system comprising a plurality of remote client devices positioned at a plurality of retail stores of a retail chain and a computational device positioned at a head office of said retail chain, said plurality of remote client devices and said computational device are communicatively connected through a network and said computational device is configured to at least:

receive a sales data from said plurality of retail stores through said plurality of remote client devices;

compute an initial sales forecast with respect to a retail store of said plurality of retail stores for each item of a plurality of items of each size of a plurality of sizes of said plurality of items;

generate a store level budget for said retail store based on said initial sales forecast and a stock value of said plurality of items computed for said retail store;

create one or more orders for one or more items of said plurality of items if said store level budget is found positive for said retail store or create one or more releases of said one or more items if said store level budget is found negative for said retail store;

sending, to a remote client device of said plurality of client devices, an initial proposal comprising one or more recommended actions related to said one or more orders and/or to said one or more releases;

allow modification in said initial proposal at said remote client device to include one or more requests to make a modified proposal subject to fulfillment of one or more rules;

collect said modified proposal from each of said plurality of remote client devices;

compute, a demand forecast as a function of a sales forecasting, a current stock and said one or more requests for said retail store with respect to said each item of said each size for a specific period of time;

compute an expected sales as a function of said demand forecast;

optimize a new stock allocation for said each item of said each size for said retail store as a function of said demand forecast subject to fulfillment of a plurality of constraints related to said one or more requests and also related to a quantity of said item of said size available in a warehouse; and

match said one or more orders and/or said one or more releases with said new stock allocation with respect to said plurality of retail stores to find a most economic shipment option.

10. The system as in claim 9, wherein said computation of said initial sales forecasting involves computation of a category seasonality for each category of said plurality of items and a size-level allocation for said each item.

11. The system as in claim 9, wherein said one or more orders and said one or more releases are ranked as per their relative priority.

12. The system as in claim 9, wherein said one or more rules ensure that said one or more recommended actions must lie within said store level budget and that said retail store cannot ask more than a total quantity available of said each item through said one or more requests.

13. The system as in claim 9, wherein fulfillment of said plurality of constraints ensure that said new stock allocation does not exceed said one or more requests made from said retail store, that a maximum delivery from said retail store does not exceed said one or more releases made from said retail store and that no said each item is sent back to said warehouse from said retail store.

14. The system as in claim 9, wherein said most economic shipment option includes shipment of said each item among said plurality of stores laterally based on said matching of said one or more orders and said one or more releases.

15. The system as in claim 9, wherein an impact of said optimization of said new stock allocation is measurable through a plurality of indexes which, preferably, comprise a shipment success ratio, a sales to shipment ration, a stock velocity ratio and a demand cover ratio.

FIG.1

CLIENT DEVICES
120  AT STORES

COMPUTATIONAL DEVICE
104  AT HEAD OFFICE

```
┌─────────────┐            ┌──────────────────────────────────────┐
│  COLLECT    │            │        RECEIVE SALES DATA            │
│ SALES DATA  │─────────►  └──────────────────────────────────────┘
└─────────────┘              204            208
      202                     │
                              ▼
            ┌──────────────────────────────────────┐
            │  COMPUTE INITIAL WEEKLY FORECAST     │
            └──────────────────────────────────────┘
                              │  210
                              ▼
            ┌──────────────────────────────────────┐
            │       NORMALIZE SEASONALITY          │
            └──────────────────────────────────────┘
                              │  212
                              ▼
            ┌──────────────────────────────────────┐
            │    COMPUTE SIZE-LEVEL ALLOCATIONS    │
            └──────────────────────────────────────┘
                              │  214
                              ▼
            ┌──────────────────────────────────────┐
            │     COMPUTE STORE-LEVEL BUDGET       │
            └──────────────────────────────────────┘
                              │  216
                              ▼
                       ◇ BUDGET POSITIVE? ◇──── NO
                              │ YES      218
                              ▼
            ┌──────────────────────────────────────┐
            │        CREATE STOCK ORDERS           │
            └──────────────────────────────────────┘
                              │  220
                              ▼
            ┌──────────────────────────────────────┐
            │       STOCK TO BE RELEASED           │
            └──────────────────────────────────────┘
                              │  222
                              ▼
            ┌──────────────────────────────────────┐
            │   COMPUTE DIFFERENCE BETWEEN         │
            │   STOCK & POTENTIAL SALES            │
            └──────────────────────────────────────┘
                              │  224
                              ▼
            ┌──────────────────────────────────────┐
            │      RANK ORDERS & RELEASES          │
            │       BASED ON PRIORITY              │
            └──────────────────────────────────────┘
                              │  226
                              ▼
            ┌──────────────────────────────────────┐
            │ GROUP THE ITEMS FOR RECOMMENDATION  │
            └──────────────────────────────────────┘
                              │  228
   230                        ▼
┌─────────────┐  ┌──────────────────────────────────────┐
│   ALLOW     │◄─│      SEND PROPOSALS TO STORE         │
│MODIFICATION │  └──────────────────────────────────────┘
│ OF PROPOSAL │                │  232
└─────────────┘                ▼
            ┌──────────────────────────────────────┐
            │    RECEIVE RETURNED PROPOSALS        │
            └──────────────────────────────────────┘
                              │  234
                              ▼
            ┌──────────────────────────────────────┐
            │      COMPUTE DEMAND FORECAST         │
            └──────────────────────────────────────┘
                              │  236
                              ▼
            ┌──────────────────────────────────────┐
            │      COMPUTE SALES FORECAST          │
            └──────────────────────────────────────┘
                              │  238
                              ▼
            ┌──────────────────────────────────────┐
            │    COMPUTE OPTIMAL ALLOCATIONS       │
            └──────────────────────────────────────┘
                              │  240
                              ▼
            ┌──────────────────────────────────────┐
            │ MATCH ORDERS AND RELEASES OPTIMALLY │
            └──────────────────────────────────────┘
                              │  242
                              ▼
            ┌──────────────────────────────────────┐
            │         ORDER SHIPMENT              │
            └──────────────────────────────────────┘
```

FIG.2

**302**

| Initial Budget | - | 9,893.00 |
|---|---|---|
| Residual Budget | | 753.00 |
| **Proposal** | | **304** |

| Item | | | Pieces | | Orders (O) | 1 - | 129 | **306** |
|---|---|---|---|---|---|---|---|---|
| Orders (O) | | | 271 | 1 | Releases (R) | 8 | 882 | |
| Releases (R) | | | 216 | 793 | Mandatory rel (MR) | 79 | 9,893 | |
| Mandatory rel (MR) | | | 52 | 161 | (altri) | - | - | |
| (other) | | | - | - | Totale | 88 | 10,646 | |
| Total | | | 2,579 | 2,656 | Action | Pieces | Budget | |
| SKC | Price | Size | Sold | Stock | R | 1 | 129 | |
| P6D124F2442V03 | 129.00 | 37 | - | 2 | R | 1 | 129 | |
| P6D124F2442V03 | 129.00 | 41 | 2 | 3 | MR | 1 | 129 | |
| P6D124F2442V03 | 129.00 | 43 | - | 2 | MR | 1 | 129 | |
| P6D124F2442V03 | 129.00 | 47 | - | 2 | O | 1 | 129 | |
| P6D124F2442V03 | 129.00 | 49 | 1 | 1 | | - | - | |
| P6D124F2442V03 | 129.00 | 51 | - | - | | - | - | |
| P6D124F2442V03 | 129.00 | 53 | - | - | R | 1 | 99 | |
| P61806F081TF34 | 99.00 | 37 | 2 | 2 | R | 1 | 99 | |
| P61806F... | 99.00 | 3~ | 2 | 2 | | | | |

## FIG.3A

**310**

| Initial Budget | - | 9,893.00 |
|---|---|---|
| Residual Budget | | 456.00 |
| **Edited proposal** | | **312** |

| Item | | | Pieces | | Orders (O) | 3 - | 387 | **314** |
|---|---|---|---|---|---|---|---|---|
| Orders (O) | | | 271 | 1 | Releases (R) | 7 | 843 | |
| Releases (R) | | | 216 | 793 | Mandatory rel (MR) | 79 | 9,893 | |
| Mandatory rel (MR) | | | 52 | 161 | (altri) | - | - | |
| (other) | | | - | - | Totale | 89 | 10,349 | |
| Total | | | 2,579 | 2,656 | Action | Pieces | Budget | |
| SKC | Price | Size | Sold | Stock | R | 1 | 129 | |
| P6D124F2442V03 | 129.00 | 37 | - | 2 | R | 2 | 258 | |
| P6D124F2442V03 | 129.00 | 41 | 2 | 3 | MR | 1 | 129 | |
| P6D124F2442V03 | 129.00 | 43 | - | 2 | MR | 1 | 129 | |
| P6D124F2442V03 | 129.00 | 47 | - | 2 | O | 1 - | 129 | |
| P6D124F2442V03 | 129.00 | 49 | 1 | 1 | O | 1 - | 129 | |
| P6D124F2442V03 | 129.00 | 51 | - | - | O | 1 - | 129 | |
| P6D124F2442V03 | 129.00 | 53 | - | - | R | 1 | 99 | |
| P61806F081TF34 | 99.00 | 37 | 2 | 2 | R | 1 | 99 | |
| P61806F... | 99.00 | 3~ | 2 | 2 | | | | |

## FIG.3B

**316**

| Store | Budget | Proposal (pieces) | | | Edited proposal (pieces) | | | Optimal allocation (pieces) | | | % proc |
|---|---|---|---|---|---|---|---|---|---|---|---|
| | | 1,834 | 1,281 | 488 | 2,500 | 2,142 | 488 | 1,222 | 790 | 376 | |
| | | O | R | MR | O | R | MR | O | R | MR | |
| Warehouse | - 7,653.00 | - | - | 65 | - | - | 50 | - | - | 56 | |
| A | - 7,386.00 | 155 | 198 | 9 | 155 | 198 | 9 | 102 | 175 | 4 | 78% |
| B | - 2,827.00 | - | - | 23 | 30 | 230 | 23 | 11 | 10 | 16 | 13% |
| C | - 2,069.00 | 54 | 59 | 9 | 70 | 64 | 9 | 43 | 49 | 9 | 71% |
| D | 43,095.00 | 356 | - | 53 | 383 | 22 | 53 | 219 | - | 39 | 56% |
| E | 26,149.00 | 229 | - | 26 | 240 | 12 | 26 | 151 | - | 19 | 61% |
| F | 13,037.00 | 184 | 62 | 32 | 203 | 134 | 32 | 95 | 32 | 27 | 42% |
| G | - 30,356.00 | - | 202 | 22 | - | 74 | 22 | - | 61 | 20 | 84% |
| H | - 3,762.00 | - | - | 30 | 1 | - | 30 | - | - | 22 | 71% |
| I | ...6.00 | - | | 26 | - | 144 | 26 | ~ | 2 | 1~ | ~0% |

## FIG.3C

FIG.4

Europäisches
Patentamt

European
Patent Office

Office européen
des brevets

**EUROPEAN SEARCH REPORT**

Application Number

EP 18 16 0663

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/174146 A1 (TAMARKIN NOAM [IL] ET AL) 26 July 2007 (2007-07-26) * paragraph [0004] - paragraph [0008]; figure 4 * ----- | 1-15 | INV. G06Q10/04 G06Q10/08 |
| X | US 2016/247108 A1 (ACUNA FERNANDO [US] ET AL) 25 August 2016 (2016-08-25) * paragraph [0026] - paragraph [0036]; figures 4,5 * ----- | 1-15 | |
| X | US 2014/058794 A1 (MALOV DENIS [US] ET AL) 27 February 2014 (2014-02-27) * paragraph [0255]; figure 5 * ----- | 1-15 | |
| X | US 2010/138264 A1 (FARIS ANDREW BRUCE [NZ] ET AL) 3 June 2010 (2010-06-03) * paragraph [0015] - paragraph [0016] * * paragraph [0045] - paragraph [0047]; figure 2 * ----- | 1-15 | |
| | | | TECHNICAL FIELDS SEARCHED (IPC) G06Q |

The present search report has been drawn up for all claims

| Place of search | Date of completion of the search | Examiner |
|---|---|---|
| Munich | 27 April 2018 | Frank, Korbinian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 18 16 0663

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2018

| Patent document cited in search report | | Publication date | Patent family member(s) | | Publication date |
|---|---|---|---|---|---|
| US 2007174146 | A1 | 26-07-2007 | NONE | | |
| US 2016247108 | A1 | 25-08-2016 | NONE | | |
| US 2014058794 | A1 | 27-02-2014 | NONE | | |
| US 2010138264 | A1 | 03-06-2010 | AU | 2005253028 A1 | 22-12-2005 |
| | | | CA | 2570116 A1 | 22-12-2005 |
| | | | NZ | 533494 A | 22-12-2006 |
| | | | US | 2010138264 A1 | 03-06-2010 |
| | | | WO | 2005122019 A1 | 22-12-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62471396 B